# FASCICULE DE BREVET EUROPEEN

(11) **EP 0 586 281 B1**
(45) Date de publication et mention de la délivrance du brevet: **06.11.1996**
(21) Numéro de dépôt: 93402081.9
(22) Date de dépôt: 20.08.1993
(51) Int. Cl.: G01L 5/28, G01M 19/00

(54) **Procédé et dispositif de test en temps réel avec simulation d'environnement par étapes successives**
Verfahren und Vorrichtung zum Testen in Echtzeit mit Umgebungssimulation durch aufeinanderfolgende Schritte
Procedure and device for real-time testing with environmental simulation in successive steps

(30) Priorité: 03.09.1992 FR 9210517
(43) Date de publication de la demande: 09.03.1994
(73) Titulaire: SEXTANT AVIONIQUE, F-92366 Meudon la Forêt Cédex (FR)
(72) Inventeur: Boue, Philippe, F-78670 Vilennes (FR)
(74) Mandataire: de Saint-Palais, Arnaud Marie

(56) Documents cités:
- EP-A- 0 336 572
- EP-A- 0 486 222

## Description

La présente invention se rapporte à un procédé de test de l'ensemble ou d'une partie d'un dispositif, par simulation de son environnement en temps réel, à l'aide de moyens informatiques de puissance réduite.

Elle s'applique notamment au test de dispositifs initialisables dont le comportement est parfaitement déterminé et répétitif. De tels dispositifs mettent en oeuvre une ou plusieurs boucles d'asservissement, comme c'est le cas, par exemple, d'un dispositif antipatinage monté sur les freins de roues d'un véhicule comme dans EP-A-336 572.

Les tests de ce type ont pour but de contrôler le fonctionnement du dispositif. Pour cela, le test en fonctionnement réel semble le plus évident et le plus efficace, mais demeure souvent coûteux et de mise en oeuvre difficile. On a donc cherché à placer le dispositif à tester dans des conditions les plus proches possibles du fonctionnement réel en remplaçant son environnement par un simulateur.

Or la simulation des actions et réactions d'un environnement requiert généralement d'effectuer de nombreux calculs. Et, pour que cette simulation soit effectuée en temps réel, les résultats de ces calculs doivent être disponibles très rapidement et donc de puissants moyens informatiques sont nécessaires. Lorsque le temps de réaction du dispositif à tester est très court, cette simulation est irréalisable, la puissance requise dépassant la capacité des moyens de calculs les plus puissants disponibles aujourd'hui.
Ce remplacement pur et simple de l'environnement se heurte donc à des limitations lorsqu'il présente une certaine complexité et lorsqu'il évolue rapidement.

La présente invention permet de résoudre ce problème en en étant capable de simuler n'importe quel environnement à l'aide de moyens informatiques présentant une puissance de calcul réduite, sans rapport avec la complexité et la rapidité d'évolution de l'environnement à simuler.

Elle propose à cet effet un procédé de test en temps réel de tout ou partie d'un dispositif interagissant avec un environnement, ledit procédé utilisant un simulateur qui met en oeuvre des moyens informatiques pour simuler l'environnement dudit dispositif.

Selon l'invention, ce procédé est caractérisé en ce qu'il comprend une multiplicité d'étapes successives, chacune de ces étapes étant précédée d'une initialisation et d'une stabilisation du dispositif, et suivie du calcul et de la mémorisation de l'action de l'environnement à partir de la dernière valeur de la réaction du dispositif, la première étape comprenant les opérations suivantes effectuées par le simulateur :
- l'application, d'une première action de l'environnement sur le dispositif pendant une certaine durée ; et
- l'acquisition de la réaction du dispositif à la première action de l'environnement ;
chacune des étapes suivantes comprenant :
- l'application successive sur le dispositif, de la première puis de chacune des actions de l'environnement mémorisées à l'issue des étapes précédentes, chacune des actions étant appliquée pendant ladite durée, et
- l'acquisition de la dernière valeur de la réaction du dispositif à la dernière action de l'environnement.

Grâce à cette particularité, la simulation de l'environnement du dispositif est obtenue par étapes successives à l'aide des résultats des calculs effectués et mémorisés par le simulateur lors des étapes précédentes. Ce procédé permet de déporter les calculs de simulation en dehors des périodes de test proprement dit, tout en étant capable faire fonctionner le dispositif en temps réel dans un environnement simulé. La puissance des moyens de calculs disponibles pour cette simulation n'intervient alors plus au niveau du test en temps réel, mais seulement au niveau des calculs de simulation.

Ainsi, la seule limitation pratique de ce procédé réside dans la durée de reconstitution du fonctionnement réel du dispositif dans son environnement, qui est sensiblement égale à la somme des temps de calcul de simulation, et donc, qui est fonction de la complexité de l'environnement à simuler.

Pour que le fonctionnement ainsi reconstitué du dispositif soit représentatif de son fonctionnement réel, il est nécessaire que la durée d'application d'une action de l'environnement soit inférieure au temps de réaction du dispositif, notamment pour éviter des problèmes de synchronisation (théorème de Shannon).

Avantageusement, ce procédé est mis en oeuvre sur une machine monoprocesseur avec un système d'exploitation temps réel multitâches.

Selon une caractéristique avantageuse de l'invention, le procédé est mis en oeuvre par deux processeurs, le premier effectuant les calculs de simulation et le second effectuant le test, c'est-à-dire, l'initialisation du dispositif, l'application des actions mémorisées de l'environnement sur le dispositif et l'acquisition des réactions du dispositif.
Cette répartition des traitements permet de regrouper toutes les opérations à effectuer en temps réel, c'est-à-dire les opérations de test sur un seul processeur.

Ce procédé est également applicable lorsque le dispositif à tester et son environnement non seulement interagissent, mais aussi réagissent à des perturbations externes. Dans ce cas, les signaux associés à ces perturbations doivent être appliqués sous forme d'échantillons obtenus par leur échantillonnage dont la période correspond à la susdite durée. Ces échantillons sont alors appliqués simultanément aux actions de l'environnement et aux réactions du dispositif.

Bien entendu, pour contrôler le bon déroulement du test en temps réel, toutes les valeurs obtenues en sortie du dispositif à tester sont mémorisées dans des tables, de même que toutes les valeurs calculées par le simulateur.

Un mode d'exécution de l'invention sera décrit ci-après, à titre d'exemple non limitatif, avec référence aux dessins dans lesquels :
la figure 1 est une représentation schématique d'une application du procédé selon l'invention ;
la figure 2 est un chronogramme donnant les périodes d'activité des principales fonctions mises en oeuvre par le procédé ;
la figure 3 représente schématiquement la mise en oeuvre du procédé ;
la figure 4 représente un exemple d'architecture de moyens informatiques utilisé par le procédé.

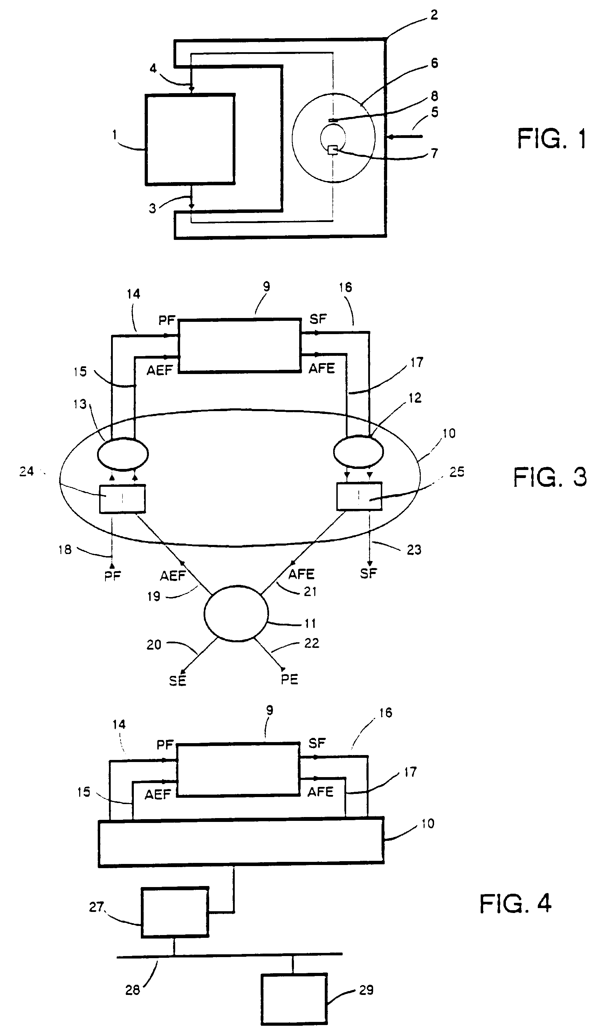

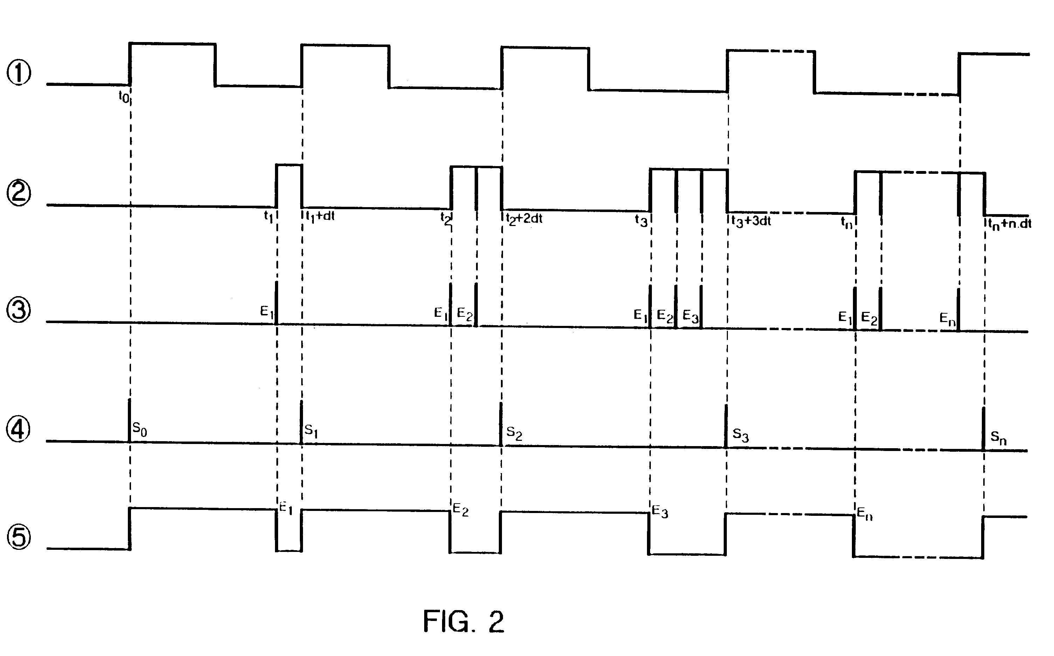

La figure 1 représente schématiquement un dispositif à tester (1) et un simulateur (2) de son environnement. Le dispositif (1) est, par exemple un dispositif antipatinage monté sur les freins de roues d'un véhicule. Un tel dispositif vise à améliorer l'efficacité du freinage en évitant le blocage et donc le patinage des roues.

L'environnement simulé d'un tel dispositif (1) est constitué d'une roue (6) sur laquelle un capteur (8) mesure la vitesse de rotation de la roue, et sur laquelle vient s'appliquer le frein (7). Le dispositif antipatinage (1) reçoit la mesure de la vitesse de rotation de la roue (6) par l'intermédiaire de la liaison (4) et fournit une pression à exercer sur le frein (7) sur la liaison (3). La pression exercée sur la pédale de frein est transmise au frein (7) par la liaison (5).

Le test de ce dispositif (1) selon l'invention se déroule par étapes successives illustré par le chronogramme de la figure 2 dans lequel chacune des courbes crénelées numérotées de 1 à 5 suivantes indiquent à l'état haut les périodes d'activité d'une fonction mise en oeuvre par le procédé :
- la courbe 1 indique les périodes d'initialisation et de stabilisation du dispositif (1),
- la courbe 2 indique les périodes de test du dispositif (1),
- la courbe 3 indique les instants où les valeurs d'entrée sont appliquées au dispositif (1),
- la courbe 4 indique les instants où le simulateur (2) effectue l'acquisition des valeurs en sortie du dispositif (1), et
- la courbe 5 indique les périodes où le simulateur (2) effectue le calcul de simulation de la valeur en entrée du dispositif suivante.

Le dispositif (1) et le simulateur (2) sont tout d'abord initialisés et placés dans un état stable.

A l'instant t₀, le dispositif (1) est à nouveau initialisé et placé dans un état stable (courbe 1). A cet instant, le simulateur reçoit par la liaison (5) l'ordre de freinage sous la forme d'une pression exercée sur la pédale de frein. Cet ordre déclenche le calcul de la vitesse de rotation E₁ de la roue (6) (courbe 5) en fonction de la valeur S₀ en sortie du dispositif (1) (courbe 4), et d'un certain nombre de paramètres de test, comme la pression exercée par le pilote sur la pédale de frein, le coefficient d'adhérence de chaque pneu sur la route, la vitesse du véhicule et son angle de braquage.

La valeur de la vitesse de rotation obtenue E₁ est mémorisée puis appliquée au dispositif (1) à l'instant t₁ (courbe 3) pendant un intervalle de temps dt. Pendant cet intervalle dt, le dispositif (1) évolue en temps réel (courbe 2), et fournit une pression de freinage S₁ au simulateur (2).

A l'instant t₁ + dt, le simulateur (2) relève cette valeur de pression S₁ (courbe 4), et déclenche le calcul de la nouvelle vitesse de rotation de la roue (6) en fonction des paramètres de test, et notamment, la pression exercée par le pilote sur la pédale de frein à l'instant dt après le démarrage du test (courbe 5). Pendant la durée de ce calcul, le test est arrêté et le dispositif est initialisé et placé à nouveau dans l'état stable précédent (courbe 1).

A l'issue de ce calcul, la valeur de la vitesse de rotation obtenue E₂ est mémorisée par le simulateur (2). Le test est ensuite relancé à l'instant t₂, comme précédemment : l'entrée mémorisée E₁ est à nouveau appliquée au dispositif (1) pendant l'intervalle de temps dt. Mais à l'instant t₂ + dt, le simulateur (2) applique sur le dispositif (1), la nouvelle valeur de la vitesse de rotation E₂ (courbe 3).

A l'instant t₂ + 2dt, le simulateur (2) relève la valeur de pression S₂ fournie par le dispositif (1) (courbe 4), arrête le test, active l'initialisation du dispositif (courbe 1) comme précédemment, puis se lance dans le calcul de la nouvelle valeur de la vitesse de rotation E₃ de la roue (6) en fonction de cette dernière valeur de pression relevée S₂ et de la pression exercée par le pilote sur la pédale de frein à l'instant 2dt après le démarrage du test (courbe 5).

La valeur de la vitesse de rotation E₃ ainsi obtenue est mémorisée, et le test du dispositif (1) est relancé à l'instant t₃, à partir de son état initial comme précédemment.

Cette fois-ci, le test se déroule sur une durée de 3dt (courbe 2) en appliquant respectivement, au début de chaque intervalle de temps intermédiaire dt, les valeurs des vitesses de rotation E₁, E₂ et E₃ calculées à l'issue des étapes de test précédentes (courbe 3).

A l'instant t₃ + 3dt, le simulateur (2) relève la valeur de pression S₃ fournie par le dispositif (1) (courbe 4), arrête le test, active l'initialisation du dispositif (courbe 1), puis se lance dans le calcul de la nouvelle valeur de la vitesse de rotation E₄ de la roue (6) en fonction de cette dernière valeur de pression relevée S₃ et de la pression exercée par le pilote sur la pédale de frein à l'instant 3dt après le démarrage du test (courbe 5).

Lors de la dernière étape de test montrée sur la figure 2, le test se déroule sur n intervalles de temps dt (courbe 3), avant lesquels sont appliqués les valeurs en entrée E₁, E₂, ... Eₙ calculées précédemment (courbe 3). A la fin du dernier intervalle de temps dt, la valeur de la pression de freinage Sₙ fournie par le dispositif (1) est relevée (courbe 4) pour déclencher un nouveau calcul de la vitesse de rotation Eₙ₊₁ de la roue (6) (courbe 5).

Le test selon le procédé se déroule ainsi par étapes successives toujours à partir d'un état initial identique, chaque étape faisant progresser le test d'une durée dt. De cette manière, le fonctionnement du dispositif (1) est reconstitué, intervalle par intervalle jusqu'à ce que la durée du test soit suffisante pour fournir des résultats significatifs.

Il est à noter que pendant les phases de déroulement du test, le simulateur (2) n'effectue aucun calcul, mais se contente d'envoyer les valeurs mémorisées au dispositif au début de chaque intervalle de temps dt.
La durée des calculs n'influe donc que sur la durée de la reconstitution du fonctionnement du dispositif et non sur la faisabilité du test en temps réel.

Ainsi, la puissance de calcul nécessaire est négligeable par rapport aux méthodes de test connues dans lesquelles les calculs doivent être effectués pendant l'intervalle de temps dt.

Pour que le fonctionnement du dispositif (1) ainsi obtenu soit représentatif de son fonctionnement réel, il est nécessaire que l'intervalle de temps dt soit inférieur au temps de réaction du dispositif (1) à tester, notamment pour éviter les problèmes de synchronisation.

Dans un cas plus général (figure 3), le dispositif (9) à tester réagit d'une part à un ensemble de perturbations PF, et d'autre part, aux actions AEF de son environnement, reçues respectivement par l'intermédiaire des liaisons (14) et (15). En sortie du dispositif (9), se trouvent ses réactions AFE vis à vis de son environnement transmises sur la liaison (17) et d'autres valeurs SF qui sont transmises sur la liaison (16).

Toutes les valeurs en entrée AEF et PF et en sortie AFE et SF du dispositif (9) sont mémorisées dans des tables, respectivement (24) et (25).

Les tables (24) de valeurs d'entrée AEF et PF sont lues par un générateur (13) qui les envoie au dispositif (9). D'autre part, les tables (25) de valeurs de sortie AFE et SF sont relevées par un dispositif d'acquisition (12) qui les mémorise dans les tables (25).

L'ensemble formé des tables (24) et (25), du générateur (13) et du dispositif d'acquisition (12) constitue le testeur (10), lequel échange avec le simulateur (11) les réactions AFE du dispositif (9) et les réactions AEF de l'environnement simulé, respectivement, par l'intermédiaire des liaisons (19) et (21).

En outre, le testeur (10), effectue la mémorisation dans les tables (24) des valeurs de perturbations PF destinées au dispositif, lesquelles lui sont transmises par la liaison (18).

Le testeur (10) envoie également sur la liaison (23) vers l'extérieur, les valeurs en sortie SF du dispositif (9).

Le simulateur (11) reçoit les perturbations PE de l'environnement sur la liaison (22), et transmet vers l'extérieur les résultats SE des calculs de simulation par la liaison (20). Dans l'exemple précédent, les perturbations PE correspondent à la pression exercée par le pilote sur la pédale de frein.

Les perturbations se présentent sous la forme de signaux variant au cours du temps et échantillonnés à la fréquence 1/dt.

Avant le démarrage du test, les tables (24, 25) du testeur (10) sont initialisées et les sorties AEF et SE sont calculées par le simulateur (11) à partir du premier échantillon des perturbations PE. Les échantillons des perturbations PF sont mémorisés dans les tables (24). Les sorties AEF sont alors transmises au testeur (10) qui les mémorise dans les tables (24) et déclenche le test.

Comme précédemment, le test se déroule par étapes successives, chaque étape commençant par une initialisation et une stabilisation du fonctionnement du dispositif (9) à tester.

Le fonctionnement du dispositif est ainsi reconstitué, chaque étape permettant d'ajouter un intervalle de temps dt de fonctionnement à l'étape précédente. Mais cette fois-ci, un échantillon de perturbation PF est appliqué sur le dispositif (9) au début de chaque intervalle dt de fonctionnement, et un échantillon de perturbation PE supplémentaire est pris compte par le simulateur (11) pour calculer les valeurs AEF et SE à la suite du dernier intervalle de fonctionnement du dispositif (9).

Les sorties SE et SF permettent de contrôler le bon déroulement du test.

Sur le schéma de la figure 3, les fonctions de test et de calcul de simulation ont été séparées en un testeur (10) et un simulateur (11).

Cette caractéristique peut être exploitée pour la mise en oeuvre du procédé selon l'invention de la manière suivante (figure 4) :

Le dispositif (9) est connecté au testeur (10) de la même manière que dans le schéma de la figure 3. Le testeur (10) est commandé par une station de travail de test (27) qui est reliée, par l'intermédiaire d'un réseau (28) à la station de simulation (29).
La station de travail de test (27) effectue également le transfert des données AEF et AFE entre le testeur (10) et la station de simulation (29).

Cette architecture matérielle permet de séparer les opérations à effectuer en temps réel des opérations de calcul. De cette manière, il n'est pas nécessaire de disposer d'une machine équipée d'un système d'exploitation temps réel multitâches.

## Revendications

1. Procédé de test en temps réel de tout ou partie d'un dispositif (1) interagissant avec un environnement, ledit procédé utilisant un simulateur (2) qui met en oeuvre des moyens informatiques pour simuler l'environnement dudit dispositif (1),
caractérisé en ce qu'il comprend une multiplicité d'étapes successives, chacune de ces étapes étant précédée d'une initialisation et d'une stabilisation du dispositif (1), et suivie du calcul et de la mémorisation de l'action de l'environnement (E₂, E₃, ... ou Eₙ) à partir de la dernière valeur (S₁, S₂, ... ou Sₙ₋₁) de la réaction du dispositif (1), la première étape comprenant les opérations suivantes effectuées par le simulateur (2) :
- l'application, d'une première action (E₁) de l'environnement sur le dispositif (1) pendant une certaine durée (dt) ; et
- l'acquisition de la réaction (S₁) du dispositif (1) à la première action de l'environnement ;
chacune des étapes suivantes comprenant :
- l'application successive sur le dispositif (1), de la première (E₁), puis de chacune (E₂, E₃, ..., Eₙ) des actions de l'environnement mémorisées à l'issue des étapes précédentes, chacune des actions étant appliquée pendant ladite durée (dt), et
- l'acquisition de la dernière valeur de la réaction (S₂, S₃,... ou Sₙ) du dispositif (1) à la dernière action (E₂, E₃, ... ou Eₙ) de l'environnement.

2. Procédé selon la revendication 1,
caractérisé en ce que ladite durée (dt) est inférieure au temps de réaction du dispositif (1).

3. Procédé selon l'une des revendications précédentes,
caractérisé en ce qu'il comprend la prise en compte par le simulateur (2), d'une valeur de perturbation de l'environnement, lors du calcul de chacune des actions (S₀, S₁, S₂, ... ou Sₙ) de celui-ci sur le dispositif (1), ladite valeur provenant de l'échantillonnage d'un signal de perturbation à une fréquence correspondant à l'inverse de ladite durée.

4. Procédé selon l'une des revendications précédentes,
caractérisé en ce qu'il comprend l'application sur le dispositif (9), d'une valeur de perturbation simultanément à l'application d'une action de l'environnement, ladite valeur provenant de l'échantillonnage d'un signal de perturbation à une fréquence correspondant à l'inverse de ladite durée.

5. Dispositif mettant en oeuvre le procédé selon l'une des revendications précédentes,
caractérisé en ce qu'il comprend 2 processeurs, un premier processeur (10) effectuant l'application de valeurs sur les entrées du dispositif (9), et l'acquisition et la mémorisation des valeurs en sortie, et un second processeur (11) effectuant les calculs de simulation.

6. Dispositif selon la revendication 5,
caractérisé en ce que le premier processeur (10) utilise un système d'exploitation temps réel, tandis que le second processeur (11) ne nécessite pas l'utilisation de techniques temps réel.

## Patentansprüche

1. Verfahren zum Test einer mit ihrem Umfeld interaktiven Vorrichtung (1) oder eines Teils von ihr in Echtzeit, wobei das Verfahren einen Simulator (2) verwendet, der Informatikmittel benutzt, um das Umfeld der Vorrichtung (1) zu simulieren,
dadurch gekennzeichnet, daß es mehrere aufeinanderfolgende Schritte aufweist, denen je eine Initialisierung und eine Stabilisierung der Vorrichtung (1) vorausgehen und auf die je die Berechnung und die Speicherung der Aktion des Umfelds (E₂, E₃, ... oder Eₙ) ausgehend vom letzten Wert (S₁, S₂ ... oder Sₙ₋₁) der Reaktion der Vorrichtung (1) folgen, wobei der erste Schritt die folgenden Operationen enthält, die vom Simulator (2) durchgeführt werden:
- das Anlegen einer ersten Aktion (E₁) des Umfelds an die Vorrichtung (1) während einer bestimmten Dauer (dt); und
- die Erfassung der Reaktion (S₁) der Vorrichtung (1) auf die erste Aktion des Umfelds;
und wobei jeder der folgenden Schritte enthält:
- das aufeinanderfolgende Anlegen der ersten (E₁) und dann jeder der weiteren nach den vorhergehenden Schritten gespeicherten Aktionen (E₂, E₃, ..., Eₙ) des Umfelds an die Vorrichtung (1), wobei jede der Aktionen während der Dauer (dt) angelegt wird, und
- die Erfassung des letzten Werts der Reaktion (S₂, S₃, ... oder Sₙ) der Vorrichtung (1) auf die letzte Aktion (E₂, E₃, ... oder Eₙ) des Umfelds.

2. Verfahren nach Anspruch 1, dadurch gekennzeichnet, daß die Dauer (dt) kürzer ist als die Reaktionszeit der Vorrichtung (1).

3. Verfahren nach einem der vorhergehenden Ansprüche, dadurch gekennzeichnet, daß ein Störwert des Umfelds bei der Berechnung jeder der Aktionen (S₀, S₁, S₂, ... oder Sₙ) des Umfelds auf die Vorrichtung (1) durch den Simulator (2) berücksichtigt wird, wobei dieser Wert aus der Tastung eines Störsignals mit einer Tastfrequenz resultiert, die dem Kehrwert der Dauer entspricht.

4. Verfahren nach einem der vorhergehenden Ansprüche, dadurch gekennzeichnet, daß ein Störwert gleichzeitig mit einer Aktion des Umfelds an die Vorrichtung (9) angelegt wird, wobei dieser Wert von der Tastung eines Störsignals mit einer Tastfrequenz kommt, die dem Kehrwert der Dauer entspricht.

5. Vorrichtung, die das Verfahren nach einem der vorhergehenden Ansprüche verwendet, dadurch gekennzeichnet, daß sie zwei Prozessoren aufweist, wobei ein erster Prozessor (10) Werte an die Eingänge der Vorrichtung (9) anlegt und am Ausgang Werte erfaßt und speichert, und ein zweiter Prozessor (11) die Simulationsberechnungen durchführt.

6. Vorrichtung nach Anspruch 5, dadurch gekennzeichnet, daß der erste Prozessor (10) ein Echtzeit-Auswertungssystem verwendet, während der zweite Prozessor (11) keine Echtzeit-Techniken erfordert.

## Claims

1. A method for real-time testing of all or part of a device (1) interacting with an environment, said method using a simulator (2) which uses a computer means to simulate the environment of said device (1),
characterized in that it comprises a multiplicity of successive stages, each of these stages being preceded by an initializing and a stabilizing of the device (1), and being followed by the computing and memorizing of the action of the environment (E₂, E₃, ... or Eₙ) on the basis of the last value (S₁, S₂ or Sₙ₋₁) of the reaction of the device (1), the first stage comprising the following operations performed by the simulator (2):
- application to the device of a first action (E₁) of the environment, for a certain duration (dt); and
- acquisition of the reaction (S₁) of the device (1) to the first action of the environment;
with each of the subsequent stages comprising:
- the successive application to the device (1) of the first (E₁), and subsequently of each (E₂, E₃, ... or Eₙ) of the actions of the environment memorized at the end of the previous stages, each of these actions being applied for said duration (dt), and
- the acquisition of the last value of the reaction (S₁, S₂, ... or Sₙ) of the device (1) to the last action (E₂, E₃, ... or Eₙ) of the environment.

2. Method as claimed in claim 1,
characterized in that said duration (dt) is shorter than the response time of the device (1).

3. Method as claimed in any one of the previous claims,
characterized in that it comprises the factoring in, by the simulator (2), of an environment disturbance value, at the time of the computing of each of the environment's actions (S₀, S₁, S₂, ... or Sₙ) on the device (1), said value coming from the sampling off of a disturbance signal at a frequency corresponding to the reciprocal of said duration.

4. Method as claimed in any one of the previous claims,
characterized in that it comprises the applying, to the device (9), of a disturbance value simultaneously with the applying of an environment action, said value coming from the sampling off of a disturbance signal at a frequency corresponding to the reciprocal of said duration.

5. Device implementing the method as claimed in any one of the previous claims,
characterized in that it comprises two processors, a first processor (10) applying values to the inputs of the device (9), as well as acquiring and memorizing output values, and a second processor (11) performing simulation computations.

6. Device as claimed in claim 5,
characterized in that the first processor (10) uses a real-time operating system, whereas the second processor (11) does not require the use of real-time techniques.
